# EUROPÄISCHE PATENTANMELDUNG

(11) **EP 1 376 068 A1**
(43) Veröffentlichungstag der Anmeldung: **02.01.2004**
(21) Anmeldenummer: 03008676.3
(22) Anmeldetag: 16.04.2003
(51) Int. Cl.: G01D 11/24

(54) **Gehäuse für einen Sensor**

(30) Priorität: 22.06.2002 DE 10227986
(71) Anmelder: Valeo Schalter und Sensoren GmbH, 74321 Bietigheim-Bissingen (DE)
(72) Erfinder: Elmering, Kai, 74321 Bietigheim-Bissingen (DE); Wehling, Hans-Wilhelm, 74074 Heilbronn (DE); Pachmann, Klaus, 75050 Gemmingen (DE)
(74) Vertreter: Dreiss, Fuhlendorf, Steimle & Becker

(57) **Zusammenfassung**

Die Erfindung betrifft einen Sensor mit einem Gehäuse aus Kunststoff, mit einem an dem Gehäuse vorgesehenen Befestigungsabschnitt, der eine Aufnahme für eine Befestigungsschraube aufweist, die zur Befestigung des Sensors an einem Gegenstand dient.

Die Erfindung kennzeichnet sich dadurch, dass wenigstens auf der dem Schraubenkopf zugewandten Seite des Befestigungsabschnitts Haltemittel für eine Scheibe angeordnet sind, gegen die der Schraubenkopf der Befestigungsschraube wirkt, wenn der Sensor an dem Gegenstand befestigt ist.

## Beschreibung

Die Erfindung betrifft einen Sensor mit einem Gehäuse aus Kunststoff, mit einem an dem Gehäuse vorgesehenen Befestigungsabschnitt, der eine Aufnahme für eine Befestigungsschraube aufweist, die zur Befestigung des Sensors an einem Gegenstand dient.

Derartige Sensoren sind in vielfältiger Art und Weise bekannt. Um ein sicheres Anbringen der Sensoren an dem Gegenstand zu ermöglichen, ist ferner bekannt, im Befestigungsabschnitt ein hülsenartiges Einlegeteil einzuspritzen, durch das die Befestigungsschraube greift. Hierdurch wird erreicht, dass die auf das Gehäuse wirkende Kraft der Befestigungsschraube nicht gegen den Kunststoff wirkt, sondern gegen das Einlegeteil.

Dieser Stand der Technik hat allerdings den Nachteil, dass der Fertigungsprozess "Umspritzen" sehr aufwendig und damit kostenintensiv ist. Außerdem müssen die Einlegeteile besonderen Anforderungen genügen.

Der vorliegenden Erfindung liegt deshalb die Aufgabe zugrunde, Sensoren vorzusehen,. die ohne Einlegeteile, wie beispielsweise Anschraubbuchsen, Metallhülsen oder Hohlniete, auskommen und dennoch eine sichere und dauerhafte Befestigung an dem Gegenstand ermöglichen.

Diese Aufgabe wird durch einen Sensor der eingangs beschriebenen Art erfindungsgemäß dadurch gelöst, dass wenigstens auf der dem Schraubenkopf zugewandten Seite des Befestigungsabschnitts Haltemittel für eine Scheibe angeordnet sind, gegen die der Schraubenkopf der Befestigungsschraube wirkt, wenn der Sensor an dem Gegenstand befestigt ist. Das Vorsehen einer Scheibe, die mittels Haltemitteln an dem Gehäuse gehalten wird, bringt den Vorteil, dass im Bereich des Befestigungsabschnitts keine Einlegeteile vorzusehen sind. Hierdurch kann der Fertigungsprozess des Sensors bzw. des Gehäuses erheblich vereinfacht werden, wodurch Kosten eingespart werden.

Insbesondere können auch Kosten an der Spritzmaschine gesenkt werden, da das Einlegen eines Einlegeteils entfällt. Um zu verhindern, dass aufgrund der Kraft der Befestigungsschraube der Kunststoff des Gehäuses im Bereich unterhalb des Schraubenkopfs negativ beeinflusst wird, beispielsweise wegfließt oder brüchig wird, wird an dem Befestigungsabschnitt die Scheibe vorgesehen, die die Auflagefläche des Schraubenkopfs an dem Gehäuse erhöht.

Vorteilhafterweise ist das Gehäuse aus einem Thermoplast. Derartige Kunststoffe haben sich für Sensorgehäuse besonders bewährt, da sie elektrisch und chemisch neutral sind und das Gehäuse dann neutrale Berührungsflächen aufweist. Die Anlagefläche des Gehäuses am Gegenstand unterliegt folglich keiner Korrosion. Dabei ist vorteilhaft, wenn der Thermoplast für die weitere Montage auch mit anderen Thermoplasten gefügt werden kann, insbesondere lasergefügt werden kann. Vorzugsweise kann der Thermoplast auch laserbeschriftet werden.

Die Scheibe kann aus einem metallischen oder keramischen Werkstoff sein. Metallische Werkstoffe weisen eine hohe Lebensdauer auf und sind billig. Keramische Werkstoffe eignen sich deshalb, weil sie sich gegenüber anderen Materialien neutral verhalten und es zu keiner Spannungskorrosion kommt.

Bei einer besonders bevorzugten Ausführungsform der Erfindung ist vorgesehen, dass die Scheibe eine Normscheibe ist. Insbesondere Scheiben gemäß der DIN 125 ff. können Verwendung finden. Diese Normteile sind günstig beziehbar, wodurch Herstellungskosten einsparbar sind.

Um ein kostengünstiges Gehäuse zu erhalten, kann erfindungsgemäß vorgesehen sein, dass das Gehäuse wenigstens im Bereich des Befestigungsabschnitts keine eingespritzten Einlegeteile umfasst. Vorzugsweise umfasst das Gehäuse überhaupt keine Einlegeteile.

Ferner vorteilhaft ist, wenn die Scheibe ein kreisrundes Loch aufweist und wenn die Aufnahme als Langnut oder Langloch ausgebildet ist. Dies hat den Vorteil, dass Fertigungsungenauigkeiten bei der Montage des Sensors an dem Gegenstand ausgeglichen werden können. Der Sensor kann entlang der Langnut oder des Langlochs bei der Montage in seiner Position verändert werden.

Bei einer vorteilhaften Ausführungsform der Erfindung ist vorgesehen, dass die Haltemittel Hakenabschnitte umfassen, die die Scheibe an insbesondere ihrem Randbereich wenigstens abschnittsweise übergreifen. Hierdurch wird erreicht, dass die Scheibe verliersicher bei Transport, Versand und Montage gehalten wird und ein Montieren des Sensors bzw. ein Durchführen der Befestigungsschraube durch die Scheibe montagesicher erfolgen kann.

Um ein einfaches Montieren der Scheibe an dem Gehäuse zu ermöglichen, kann vorgesehen sein, dass die Haltemittel derart elastisch ausgebildet sind, dass bei axialem Einführen der Scheibe die Haltemittel in radialer Richtung ausweichen und die Scheibe nachgiebig überschnappen. Diese Ausführungsform hat ferner den Vorteil, dass die Montage der Scheibe an dem Gehäuse in axialer Richtung maschinell erfolgen kann. Hierbei ist auch denkbar, dass die Scheibe gemeinsam mit der Befestigungsschraube axial zugeführt werden kann, wobei beim Einschrauben der Befestigungsschraube die Scheibe sich in axialer Richtung bewegt und die Haltemittel in radialer Richtung ausweichen. Ferner ist erfindungsgemäß denkbar, dass die Scheibe seitlich unter die Haltemittel einschiebbar ist. Eine derartige Ausführung hat den Vorteil, dass die Montage der Scheibe an dem Gehäuse in radialer Richtung, von der Seite her erfolgen kann.

Um die Scheibe in seitlicher Richtung in ihrer Bewegungsfreiheit zu begrenzen, ist vorteilhafterweise vorgesehen, dass der Befestigungsabschnitt eine Scheibensenkung aufweist. Die Scheibensenkung ist vorteilhafterweise zylindrisch ausgebildet. Die Bewegungsfreiheit der Scheibe wird durch Anlaufen der Schmalseite der Scheibe gegen die Wandung der Scheibensenkung begrenzt.

Um den Sensor in der vorgesehenen Position bei der Montage positionieren zu können, ist vorteilhafterweise vorgesehen, dass die Scheibe in der Scheibensenkung in radialer Richtung wenigstens bedingt verschieblich gehaltert ist. Die Verschieblichkeit soll insbesondere bei Vorsehen einer Langnut oder eines Langlochs in Richtung der Langnut oder des Langlochs erfolgen.

Um ein seitliches Einführen der Scheibe in die Scheibensenkung zu ermöglichen, kann erfindungsgemäß vorgesehen sein, dass die Scheibensenkung in radialer Richtung an wenigstens einer Seite offen ist. In diesem Bereich können erfindungsgemäß Rückhaltemittel, insbesondere in Form von Federzungen, vorgesehen sein, die zwar ein Einschieben der Scheibe ermöglichen, aber einem Ausführen der Scheibe aus der Scheibensenkung in radialer Richtung entgegenwirken. Die Rückhaltemittel sind vorteilhafterweise einstückig mit dem Befestigungsabschnitt ausgebildet.

Weitere vorteilhafte Ausgestaltungen und Einzelheiten der Erfindung sind der nachfolgenden Beschreibung zu entnehmen, in der die Erfindung anhand der in der Zeichnung dargestellten Ausführungsbeispiele näher beschrieben und erläutert sind.

In der Zeichnung zeigen:
- Fig. 1:: eine erste Ausführungsform eines erfindungsgemäßen Sensors in perspektivischer Ansicht;
- Fig. 2:: den Befestigungsabschnitt des Sensors gemäß Fig. 1 ;
- Fig. 3:: einen zweiten erfindungsgemäßen Sensor in perspektivischer Ansicht; und
- Fig. 4:: den Befestigungsabschnitt des Sensors gemäß Fig. 3;

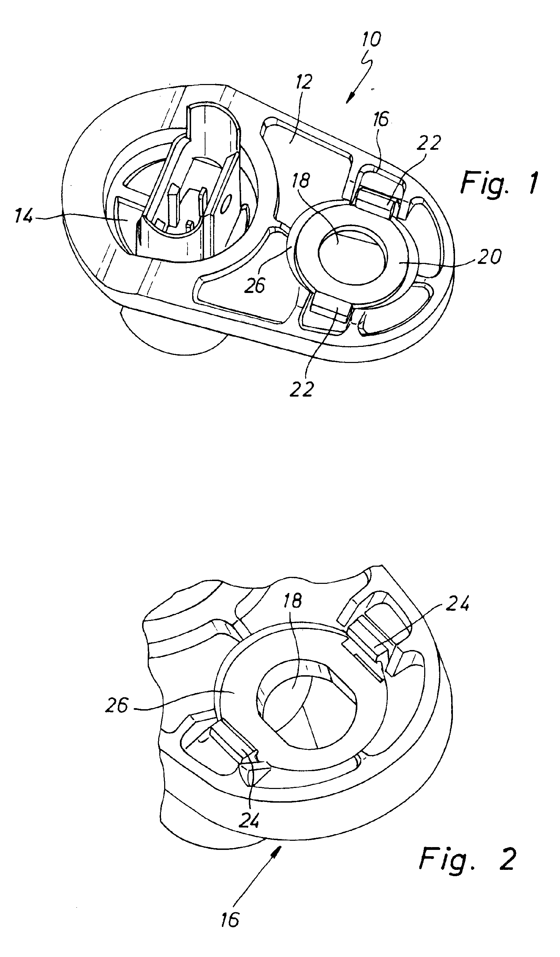

Der in der Fig. 1 dargestellte Sensor 10 umfasst ein Gehäuse 12, das zur Aufnahme eines Sensorelements 14 dient. Der Sensor 10 sieht einen Befestigungsabschnitt 16 vor, der eine Aufnahme in Form eines Langlochs 18 für eine nicht dargestellte Befestigungsschraube umfasst. Zur Befestigung des Sensors 10 an einem nicht dargestellten Gegenstand wird die Befestigungsschraube durch das Langloch 18 geführt und mit dem Gegenstand verschraubt. Der Schraubenkopf der Befestigungsschraube wirkt dann gegen eine Scheibe 20, die vorteilhafterweise als Normscheibe gemäß DIN 125 ausgeführt ist. Die Scheibe 20 wird mittels Haltemittel 22 an dem Befestigungsabschnitt 16 bzw. an dem Gehäuse 12 gehalten. Die Haltemittel 22 sind an das Kunststoffgehäuse 12 angeformt und umfassen Hakenabschnitte 24, die die Scheibe 20 an ihrem Randbereich abschnittsweise übergreifen, was insbesondere in Fig. 1 deutlich zu sehen ist. Insgesamt sind zwei Haltemittel 22 vorgesehen, die einander gegenüberliegen. Die Haltemittel 22 sind an den beiden Längsseiten einer Scheibensenkung 26 vorgesehen, in der die Scheibe 20 in Richtung des Langlochs 18 verschiebbar gehalten ist.

Die Haltemittel 22 sind derart elastisch ausgebildet, dass bei axialem Einführen der Scheibe 20 die Haltemittel in radialer Richtung ausweichen und die Scheibe nachgiebig überschnappen. Dadurch kann die Scheibe 20 auf einfache Art und Weise an dem Sensor 10 befestigt werden. Die Haltemittel 22 in Verbindung mit der Scheibensenkung 26 dienen als Verlierschutz der Scheibe 20. Der Sensor 10 kann folglich mit der Scheibe 20 gehandhabt werden, ohne dass die Scheibe 20 verlorengeht.

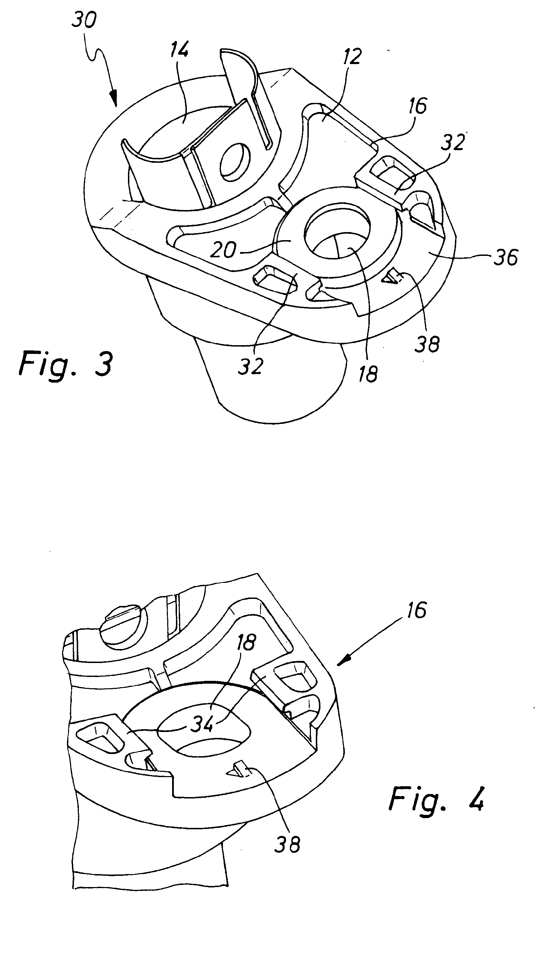

Der in den Fig. 3 und 4 dargestellte Sensor 30 weist entsprechend dem Sensor 10 ein Gehäuse 12 und ein an das Gehäuse 12 angeformten Befestigungsabschnitt 16 auf. Der Befestigungsabschnitt 16 weist zur Durchführung einer nicht dargestellten Befestigungsschraube ebenfalls ein Langloch 18 auf. Auf der dem Schraubenkopf zugewandten Seite ist entsprechend dem Sensor 10 eine Normscheibe 20 vorgesehen. Die Scheibe 20 wird von einander gegenüberliegenden, parallel zu den Längsseiten des Langlochs 18 angeordneten Haltemitteln 32 an dem Befestigungsabschnitt 16 gehalten. Die Haltemittel 32 umfassen die Scheibe 20 bedingt übergreifende Hakenabschnitte 34. Die Scheibe 20 ist in Richtung des Langlochs 18 in einer Scheibensenkung 36 verschieblich gehalten. Die Scheibensenkung 36 ist in Richtung des Langlochs 18 offen, so dass die Scheibe 20 in die Scheibensenkung 36 seitlich unter die Haltemittel 32 bzw. die Hakenabschnitte 34 einschiebbar ist. Als Verliersicherung der Scheibe 20 ist ein Rückhaltemittel in Form einer Federzunge 38 vorgesehen, das beim Einführen der Scheibe 20 elastisch nachgiebig ist. Ein Ausführen der Scheibe 20 aus der Scheibensenkung 36 wird allerdings durch die sich federnd aufstellende Federzunge 38 verhindert.

Die in der Zeichnung dargestellten Sensoren 10 und 30 haben den Vorteil, dass ihr Gehäuse ohne Einlegeteile spritzgegossen werden kann. Ein derartiges Gehäuse ist auf kostengünstige Art und Weise herstellbar. Aufgrund der Scheiben 20 können die Sensoren 10 und 30 dennoch mittels einer Befestigungsschraube dauerhaft positionssicher an einem entsprechenden Gegenstand, beispielsweise einem Motorgehäuse, befestigt werden.

Alle in der Beschreibung, der Zeichnung und den nachfolgenden Ansprüchen dargestellten Merkmale können sowohl einzeln als auch in beliebiger Kombination miteinander erfindungswesentlich sein.

## Patentansprüche

1. Sensor (10, 30) mit einem Gehäuse (12) aus Kunststoff, mit einem an dem Gehäuse (12) vorgesehenen Befestigungsabschnitt (16), der eine Aufnahme (18) für eine Befestigungsschraube aufweist, die zur Befestigung des Sensors (10, 30) an einem Gegenstand dient, **dadurch gekennzeichnet, dass** wenigstens auf der dem Schraubenkopf zugewandten Seite des Befestigungsabschnitts Haltemittel (22, 24; 32, 34) für eine Scheibe (20) angeordnet sind, gegen die der Schraubenkopf der Befestigungsschraube wirkt, wenn der Sensor (10, 30) an dem Gegenstand befestigt ist.

2. Sensor (10, 30) nach Anspruch 1, **dadurch gekennzeichnet, dass** das Gehäuse (12) aus einem Thermoplast ist.

3. Sensor (10, 30) nach Anspruch 1 oder 2, **dadurch gekennzeichnet, dass** die Scheibe (20) aus einem metallischen oder keramischen Werkstoff ist.

4. Sensor (10, 30) nach Anspruch 1, 2 oder 3, **dadurch gekennzeichnet, dass** die Scheibe (20) eine Normscheibe ist.

5. Sensor (10, 30) nach einem der vorhergehenden Ansprüche, **dadurch gekennzeichnet, dass** das Gehäuse (12) wenigstens im Bereich des Befestigungsabschnitts (16) keine eingespritzten Einlegeteile umfasst.

6. Sensor (10, 30) nach einem der vorhergehenden Ansprüche, **dadurch gekennzeichnet, dass** die Scheibe (20) ein kreisrundes Loch aufweist und dass die Aufnahme als Langnut oder Langloch (18) ausgebildet ist.

7. Sensor (10, 30) nach einem der vorhergehenden Ansprüche, **dadurch gekennzeichnet, dass** die Haltemittel (22, 32) Hakenabschnitte (24, 34) umfassen, die die Scheibe (20) an insbesondere ihrem Randbereich wenigstens abschnittsweise übergreifen.

8. Sensor (10) nach einem der vorhergehenden Ansprüche, **dadurch gekennzeichnet, dass** die Haltemittel (22, 24) derart elastisch ausgebildet sind, dass bei axialem Einführen der Scheibe (20) die Haltemittel (22) in radialer Richtung ausweichen und die Scheibe (20) nachgiebig überschnappen

9. Sensor (30) nach einem der vorhergehenden Ansprüche, **dadurch gekennzeichnet, dass** die Scheibe (20) seitlich unter die Haltemittel (32, 34) einschiebbar ist.

10. Sensor (10, 30) nach einem der vorhergehenden Ansprüche, **dadurch gekennzeichnet, dass** der Befestigungsabschnitt (16) eine Scheibensenkung (26, 36) aufweist.

11. Sensor (10, 30) nach Anspruch 10, **dadurch gekennzeichnet, dass** die Scheibe (20) in der Scheibensenkung (26, 36) in radialer Richtung wenigstens bedingt verschieblich gehaltert ist.

12. Sensor (30) nach Anspruch 10 oder 11, **dadurch gekennzeichnet, dass** die Scheibensenkung (36) in radialer Richtung an wenigstens einer Seite offen ist, so dass die Scheibe (20) in die Scheibensenkung (36) seitlich einschiebbar ist.

13. Sensor (30) nach Anspruch 12, **dadurch gekennzeichnet, dass** an der offenen Seite der Scheibensenkung (36) Rückhaltemittel (38) zur Verliersicherung der Scheibe (20) angeordnet sind.
